# EUROPÄISCHE PATENTANMELDUNG

(11) **EP 1 795 684 A2**
(43) Veröffentlichungstag der Anmeldung: **13.06.2007**
(21) Anmeldenummer: 06025186.5
(22) Anmeldetag: 06.12.2006
(51) Int. Cl.: E05F 15/12

(54) **Kompakter Schwenkantrieb für Fahrzeugklappen**

(30) Priorität: 08.12.2005 DE 102005059051
(71) Anmelder: Kiekert Aktiengesellschaft, 42579 Heiligenhaus (DE)
(72) Erfinder: Kaya, Murat, 41462 Neuss (DE); Gibat, Thomas, 47839 Krefeld (DE); Boddenberg, Stefan, 42799 Leichlingen (DE); Ostermann, Wilfried, 45239 Essen (DE)

(57) **Zusammenfassung**

Vorrichtung (1) zum Betätigen einer schwenkbaren Klappe (2) an einem Kraftfahrzeugbauteil (3) aufweisend einen Schwenkantrieb (4) mit zwei elektrischen Motoren (5, 6), und zwei elektrischen Motorsteuerungen (7, 8), wobei die Motoren (5, 6) eine bauliche Einheit (9, 10) mit jeweils einer elektrischen Motorsteuerung (7, 8) bilden. Damit kann ein leicht nachrüstbarer, modular aufgebauter und geringen Bauraum einnehmbarer Schwenkantrieb beispielsweise für Heckklappen an Kraftfahrzeugen bereitgestellt werden.

## Beschreibung

Die vorliegende Erfindung betrifft eine Vorrichtung zum Betätigen einer schwenkbaren Klappe an einem Kraftfahrzeugbauteil aufweisend einen Schwenkbetrieb mit zwei elektrischen Motoren. Solche Vorrichtungen werden insbesondere zur Betätigung von Heck- oder Kofferraumklappen an Kraftfahrzeugen eingesetzt.

Allgemein ist es bekannt, Heckklappen oder auch Kofferraumdeckel aus Komfortgründen elektromotorisch unterstützt aus einer geschlossenen in eine geöffnete Stellung und/oder aus einer geöffneten in eine geschlossene Stellung zu überführen. Insbesondere großvolumige Fahrzeuge, wie beispielsweise so genannte Kombi, SUV oder Van, verfügen zumeist über große und zugleich schwere Heckklappen, die sich seitens des Benutzers nur unter erhöhten Kraftaufwand manuell verstellen lassen, so dass sich hier eine elektromotorische Unterstützung als unerlässlich erwiesen hat. Weiterhin ist es bekannt, dass der für das Verfahren der Heckklappe eingesetzte elektromotorische Antrieb im Bereich der Scharniere seine Anordnung findet und dass entweder über Kraftumlenkelemente oder direkt über das Scharnier das aufzubringende Drehmoment auf die zu verschwenkende Heckklappe übertragen wird. Dabei werden Antriebskonzepte verfolgt, die sowohl auf den Einsatz von zwei parallel arbeitenden Elektromotoren als auch auf den Einsatz eines einzigen Elektromotors zurückgreifen.

Als Beispiel für den Einsatz von zwei Elektromotoren kann die DE 102 32 105 A1 angeführt werden. Dort wird vorgeschlagen, im Bereich des Dachträgers zwei orthogonal zur Fahrzeuglängsachse ausgerichtete Schwenkantriebe anzuordnen, die jeweils auf ein Scharnier bzw. eine Scharnierachse wirken. Dieses System hat den Vorteil, dass Fahrzeuge ohne elektromotorisch verschwenkbare Heckklappe auf einfache Art und Weise nachgerüstet werden können.

Neben den Motoren müssen noch eine Reihe weitere Komponenten zur Aktivierung bzw. dem Betrieb der Motoren vorgesehen sein. Diese Komponenten dienen z.B. der Ausführung folgender Funktionen: Ansteuerung des Elektromotors, Aufnahme von Kenngrößen des Elektromotors (wie z. B. die Drehgeschwindigkeit, das Drehmoment, die Temperatur, etc.), Auswerten der aufgenommenen Kenngrößen sowie Bereitstellen einer Verbindung hin zu einem Management-System des Fahrzeugs (insbesondere mittels einem Daten-BUSSystem). Diese Komponenten werden, wie dies auch in der DE 102 32 105 A1 veranschaulicht ist, im trockenen Innenraum des Fahrzeugs z.B. auf einem separaten Modulträger positioniert.

Aufgrund der Größe und Schwere der zu bewegenden Klappen hat sich bei den bekannten Konzepten gezeigt, dass entsprechend stark dimensionierte bzw. ausgelegte Elektromotoren die erforderlichen Kräfte aufbringen müssen. Solche Elektromotoren nebst Elektronik erfordern demzufolge relativ großen Einbauraum, der zumeist im Fahrzeuginnenraum, insbesondere im Bereich des Dachhimmels, oder Dachträgers zur Verfügung gestellt werden muss. Die von den Motoren entfernte Positionierung der Steuerung muss zudem feuchtigkeitsgeschützt und gegen ungewollte Beschädigung gesichert sein.

Aufgabe der vorliegenden Erfindung ist es, die mit Bezug auf den Stand der Technik geschilderten Probleme zumindest teilweise zu lösen bzw. zu mindern. Insbesondere soll ein Antriebssystem für eine Kappe eines Fahrzeugs geschaffen werden, welches sich durch seinen kompakten, modularen Aufbau einerseits Platz sparend am Fahrzeug anordnen bzw. anbringen lässt und zudem eine einfache und kostengünstige Fertigung sowie Montage ermöglicht.

Diese Aufgaben werden gelöst mit einer Vorrichtung gemäß den Merkmalen des Patentanspruchs 1. Weitere vorteilhafte Ausgestaltungen sind in den abhängig formulierten Patentansprüchen angegeben. Es ist darauf hinzuweisen, dass die den Patentansprüchen aufgeführten Merkmale in beliebiger, technologisch sinnvoller, Weise kombiniert werden können, und weitere Ausgestaltungen der Erfindung aufzeigen.

Demnach hat die Vorrichtung zum Betätigen einer schwenkbaren Klappe an einem Kraftfahrzeugbauteil einen Schwenkantrieb mit zwei elektrischen Motoren und zwei elektrischen Motorsteuerungen und zeichnet sich dadurch aus, dass die Motoren eine bauliche Einheit mit jeweils einer elektrischen Motorsteuerung bilden.

Im Hinblick auf die schwenkbare Klappe ist insbesondere die Heck- und/oder Kofferraumklappe eines Kraftfahrzeuges gemeint, wobei dieses System unter Umständen auch bei anderen Klappen oder Türen einsetzbar ist. Die Motoren können direkt oder aber beispielsweise auch über so genannte Kraftumlenkelemente auf die schwenkbare Klappe einwirken. Besonders bevorzugt sind längenveränderliche Motoren, beispielsweise nach Art eines Spindel- oder Linearmotors. Für den Fall, dass es sich um eine Heck- bzw. Kofferraumklappe handelt ist bevorzugt, dass die zwei elektrischen Motoren im Wesentlichen symmetrisch zur Fahrzeuglängsachse zwischen der Heck- bzw. Kofferraumklappe und dem Kraftfahrzeugbauteil angeordnet sind.

Mit den "Motorsteuerungen" sind insbesondere die Bauteile gemeint, die eine Aktivierung, Regelung und Deaktivierung des Motorbetriebs bewirken. Dazu ist jedem elektrischen Motor eine separate elektrische Motorsteuerung zugeordnet.

Während bei bekannten Vorrichtungen die Motorsteuerung an einem entfernten Ort positioniert war und über entsprechende Kabel mit den Motoren verbunden wurde, wird hier eine direkte Anbindung der elektrischen Motorsteuerung an die Motoren vorgeschlagen. Dazu sind die Motorsteuerungen beispielsweise in entsprechenden Gehäusen der Motoren positioniert. "Bauliche Einheit" bedeutet insbesondere, dass ein Motor und die dazugehörige Motorsteuerung in einem separaten Gehäuse gemeinsam angeordnet sind.

Des Weiteren wird vorgeschlagen, dass diese Einheiten im Nassbereich eines Kraftfahrzeuges angeordnet sind. Der "Nassbereich" stellt den Bereich eines Kraftfahrzeuges dar, der nicht mittels separater Dichtmittel gegen Feuchtigkeit abgedichtet ist, also insbesondere außerhalb des trockenen Innenraumes des Kraftfahrzeugs liegt. Somit können die Motoren und die Motorsteuerungen als bauliche Einheit beispielsweise zwischen Heckklappe und Karosserie angeordnet werden, ohne dass es hierfür separater Dichtmittel bedarf. Damit ist eine leichtere Montage bzw. Nachrüstbarkeit der Vorrichtung für Kraftfahrzeuge ohne elektromotorisch verstellbare Klappen gegeben.

Gemäß einer Weiterbildung der Vorrichtung sind die Motoren stabförmig ausgeführt, wobei an deren Stirnseite die elektrische Motorsteuerung positioniert ist. "Stabförmig" meint insbesondere eine im Wesentlichen längliche Gestalt, wobei nahe einer ersten Stirnseite eine Verbindung hin zur schwenkbaren Klappe und der anderen Stirnseite eine Verbindung hin zum Kraftfahrzeugbauteil gegeben ist. Vorteilhafterweise ist dabei ein Teilbereich der Stirnseite gegenüber der baulichen Einheit beweglich, insbesondere längenveränderlich. Dieser längenveränderliche Teil ist vorteilhafterweise an der schwenkbaren Klappe positioniert, während die gegenüberliegende Stirnseite, versehen mit der elektrischen Motorsteuerung an dem Kraftfahrzeugbauteil positioniert ist. Damit ist die elektromotorische Steuerung regelmäßig nahe am Trockenbereich des Kraftfahrzeugs positioniert, so dass hier nur kurze Kabelstränge erforderlich sind.

Weiterhin ist auch vorteilhaft, dass die Komponenten der Motorsteuerung in Sandwich-Bauweise angeordnet sind. Die Komponenten umfassen elektronische Bauteile wie insbesondere Mikroprozessoren, Mikrocontroller, Sensoren, Leistungsteile (wie z. B. eine so genannte H-Brücke), Kapazitäten, Widerstände und Ähnliches. Diese können auf einer oder mehreren Leiterplatten angeordnet sein, die vorteilhafterweise entlang einer zentralen Achse des Motors positioniert sind. Besonders bevorzugt sind die Komponenten auf zwei oder drei übereinander angeordneten und miteinander verbundenen Leiterplatten angeordnet. Damit ist eine sehr kompakte Anordnung der Komponenten möglich. Demnach meint eine "Sandwich-Bauweise" insbesondere eine schichtweise Anordnung mehrerer Leiterplatten, auf denen die Komponenten so angeordnet sind, dass diese elektrisch leitend verbunden sind und zusammenwirken können.

Einer Weiterbildung der Vorrichtung zufolge weist eine Einheit ein Regelungsaggregat auf, dass eine abgestimmte Verfahrweise der beiden Motoren regelt. Das bedeutet mit anderen Worten, dass das Regelungsaggregat der einen Einheit mit Komponenten der anderen Motorsteuerung in der Weise zusammenwirkt, dass der Betrieb des anderen Motors überwacht und gegebenenfalls nachgeregelt wird. Damit soll z.B. eine synchrone Verfahrweise der beiden Motoren gewährleistet werden. Besonders bevorzugt ist dabei ein so genannter Master-Slave-Betrieb gegeben.

Darüber hinaus ist vorteilhaft, dass im Bereich der Komponenten der Motorsteuerung wenigstens eine der folgenden Schutzmaßnahmen vorgesehen ist: Mittel zum Schutz der Umgebung gegen elektromagnetische Abstrahlung des Motors sowie Motorsteuerung, Mittel zum Schutz der Motorsteuerung gegen Temperaturschwankungen, Mittel zum Schutz der Motorsteuerung gegen Kontakt mit Fremdkörpern. Bevorzugt sind alle diese Schutzmaßnahmen vorgesehen. Die Mittel zum Schutz der Umgebung gegen elektromagnetische Abstrahlung des Motors sowie der Motorsteuerung (EMV-Schutz) dienen insbesondere der Abschirmung von elektromagnetischen Wellen, Feldern, etc., die die Funktion anderer am bzw. im Kraftfahrzeug verbauter elektronischer Bauteile in ungewünschtem Maße beeinflussen könnten. Diese Mittel können beispielsweise Bauteile aus Aluminium oder Weißblech umfassen, die zumindest teilweise um die Komponenten der Motorsteuerung positioniert sind. Die Mittel zum Schutz der Motorsteuerung gegen Temperaturschwankungen dienen insbesondere der Wärmeableitung von der Motorsteuerung bzw. dem Motor. Die Mittel zum Schutz der Motorsteuerung gegen Kontakt mit Fremdkörpern haben die Aufgabe, das Innenleben des Motors bzw. der Motorsteuerung gegen von außen auf die Einheit einwirkende Feuchtigkeit bzw. Nässe abzudichten, das Eindringen von Schmutz zu verhindern und/oder einen mechanischen Kontakt mit Gegenständen zu vermeiden. Dabei sind insbesondere alle Öffnungen oder Verbindungsstellen von Gehäuseteilen zu berücksichtigen.

Schließlich wird auch noch vorgeschlagen, dass zumindest eine der beiden Motorsteuerungen mit einem Managementsystem für das Kraftfahrzeug zusammenwirkt. Besonders bevorzugt ist dabei die Ausgestaltung, wobei die Motorsteuerung, die ein Regelungsaggregat umfasst, mit dem Managementsystem für das Kraftfahrzeug zusammenwirkt. Hierzu werden insbesondere CAN und/oder LIN Bus-Systeme eingesetzt. Das Managementsystem hat beispielsweise neben der Überwachung bzw. der Steuerung des Schwenkantriebs die Aufgabe, ein elektrisches Öffnen und/oder Schließen von mit den Klappen verbundenen Schlössern zu überwachen, zu steuern und dergleichen und/oder eine Berechtigungsanfrage bzw. eine Identifizierung des Benutzers vor der Aktivierung der Schlösser durchzuführen ("keyless-entry"-Systeme).

Die Erfindung sowie das technische Umfeld werden anhand der Figuren näher erläutert. Dabei zeigen die Figuren besonders bevorzugte Ausgestaltungen der Erfindung, auf die diese jedoch nicht begrenzt ist. Es zeigen schematisch:
- Fig. 1:: ein Fahrzeug mit einer Heckklappe und einer Ausführungsvariante des Schwenkantriebs,
- Fig. 2:: eine Darstellung eines Ausführungsbeispiels einer ersten baulichen Einheit,
- Fig. 3:: eine weitere Ausführungsvariante eines Schwenkantriebs, und
- Fig. 4:: eine Detailansicht im Schnitt einer anderen Ausführungsvariante der Motorsteuerung.

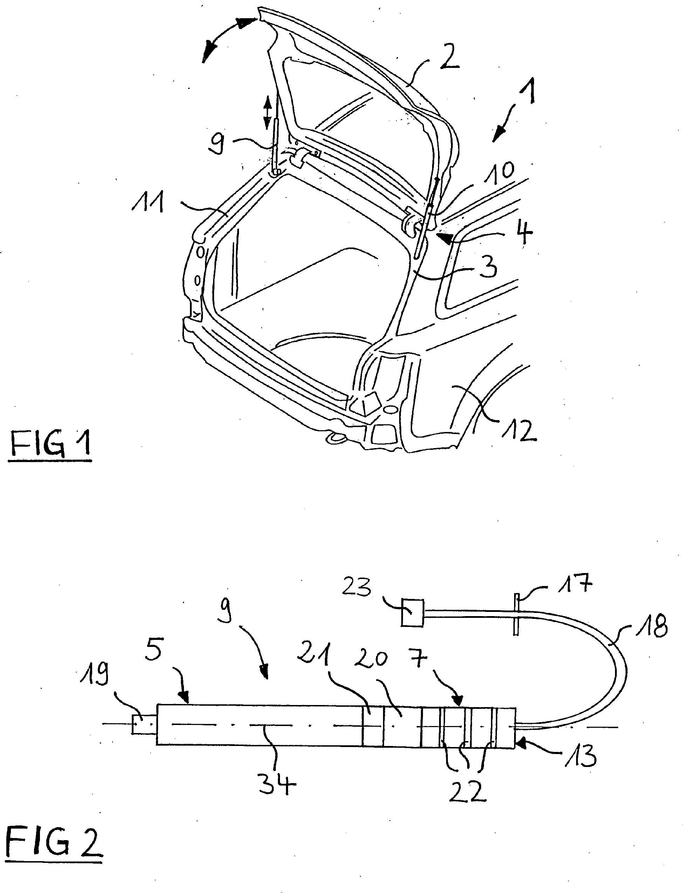

Fig. 1 veranschaulicht eine Vorrichtung 1 zum Betätigen einer schwenkbaren Klappe 2 an eine Kraftfahrzeugbauteil 3 eines Fahrzeugs 12. Der dargestellte Schwenkantrieb 4 weist zwischen der schwenkbaren Klappe 2 und dem Kraftfahrzeugbauteil 3 symmetrisch angeordnete bauliche Einheiten 9, 10 auf, die nach Aktivierung eine Längenveränderung vornehmen, so dass eine gleichmäßige, verwindungsfreie Schwenkbewegung der Klappe 2 ausgeführt wird (durch die Doppelpfeile veranschaulicht). Die Einheiten 9, 10 sind hier im Nassbereich 11 des Kraftfahrzeugs 12 angeordnet und wirken direkt auf die Klappe 2 ein. Es ist jedoch grundsätzlich auch möglich, dass (nicht dargestellte) Kraftumlenkelemente (Hebel, Scharniere, Federelemente, Dämpfungsglieder, etc.) zwischen dem Kraftfahrzeugbauteil 3 bzw. der Klappe 2 und der baulichen Einheit 9, 10 vorgesehen sind.

Fig. 2 zeigt nunmehr einen im Wesentlichen stabförmig ausgeführten ersten Motor 5, der hier mit einer Spindel 19 dargestellt ist, die bezüglich der Achse 34 längs verfahrbar ist. Zu dieser Längsbewegung der Spindel 19 ist ein Getriebe 21 sowie eine Kupplung 20 vorgesehen. Die Kupplung 20 hat die Aufgabe, im Fall des elektromotorischen Betätigens der Klappe 2 einen Kraftschluss bereitzustellen, der z.B. im Falle einer manuellen Betätigung getrennt werden kann. Das hat den Vorteil, dass beispielsweise bei der manuellen Öffnungs-Betätigung oder auch Not-Betätigung (bei Ausfall eines Motors) nur die Gewichtskraft der Klappe 2 und nicht noch zusätzlich der zumeist selbst hemmende Antriebsmechanismus überwunden werden muss.

Im Bereich der rechts dargestellten ersten Stirnseite 13 ist zudem die erste Motorsteuerung 7 positioniert. Die erste Motorsteuerung 7 umfasst drei Leiterplatten 22, auf der die Komponenten der ersten Motorsteuerung 7 vorgesehen sind. Zur Daten- und Energieversorgung der ersten Einheit 9 ist ebenfalls an der ersten Stirnseite 13 ein Kabel 18 vorgesehen, dass beispielsweise mit einer Dichtung 17 in den Trockenbereich eines Kraftfahrzeuges eingeführt und über den dargestellten Stecker 23 mit weiteren Systemen des Kraftfahrzeugs verbunden werden kann.

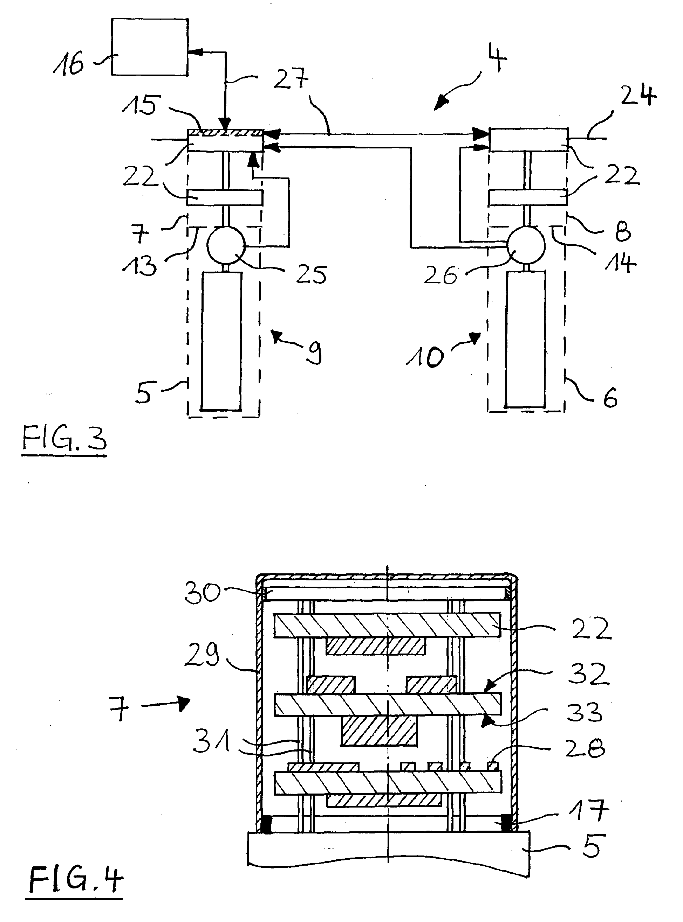

In der Fig. 3 ist eine Anordnung für eine besonders bevorzugte Betriebsweise der ersten Einheit 9 und der zweiten Einheit 10 im so genannten Master-Slave-Modus veranschaulicht. Die links dargestellte erste Einheit 9 umfasst einen ersten Motor 5 und eine erste Motorsteuerung 7. Zum ersten Motor 5 wird eine erste Sensoreinheit 25 zugerechnet, die beispielsweise so genannte Hall-Sensoren umfasst. Diese erste Sensoreinheit 25 dient der Überwachung der zurückgelegten Wege bzw. ausgeführten Geschwindigkeiten des ersten Motors 5. Im Bereich der ersten Stirnseite 13 ist zudem die erste Motorsteuerung 7 mit zwei Leiterplatten 22 in Sandwich-Bauweise dargestellt. Auf der oben dargestellten Leiterplatte 22 ist weiterhin ein Regelungsaggregat 15 vorgesehen.

Der Schwenkantrieb 4 weist außerdem eine zweite Einheit 10 mit nahezu identischem, modularem Aufbau auf. Demnach ist ein zweiter Motor 6 mit einer zweiten Sensoreinheit 26 ausgebildet. Die an der zweiten Stirnseite 14 platzierte zweite Motorsteuerung 8 umfasst jeweils 2 Leiterplatten 22 auf der die Komponenten der zweiten Motorsteuerung 8 positioniert sind. Zudem ist auch eine Stromzufuhr 24 ausgebildet.

Mit entsprechenden Pfeilen sind die Datenverbindungen 27 veranschaulicht, die während des Betriebes der Vorrichtung 1 bzw. des Schwenkantriebs 4 genutzt werden, wobei die Pfeile eine Richtung des Datenaustauschs veranschaulichen (mono- oder bidirektional, verwirklicht bevorzugt mit einem LIN/CAN-System). Die erste Einheit 9 wird als so genannter Master betrieben. Dazu liefert die erste Sensoreinheit 25 Informationen über den ersten Motor 5 an einen auf der oberen Leiterplatte 22 angeordneten Mikrocontroller bzw. an das Regelungsaggregat 15. Die zweite Einheit 10, die als so genannter Slave betrieben wird, ist mit einer entsprechenden Datenverbindung 27 von der zweiten Sensoreinheit 26 hin zur oben dargestellten Leiterplatte 22 ausgebildet. Zudem liefert die zweite Sensoreinheit 26 auch Daten bzw. Informationen an die oben dargestellte Leiterplatte 22 bzw. das Regelungsaggregat 15 der ersten Einheit 9. In Abstimmung mit dem Managementsystem 16 und in Korrelation mit dem Betriebszustand des zweiten Motors 6 erfolgt nun eine Ansteuerung der einzelnen Komponenten bzw. Bauteile durch das Regelungsaggregat 15, so dass eine abgestimmte, insbesondere symmetrische, Verfahrweise der beiden Motoren 5, 6 stattfindet.

In Fig. 4 ist schematisch und in einem Teilschnitt eine Ausführungsvariante einer ersten Motorsteuerung 7 dargestellt, die stirnseitig auf dem ersten Motor 5 positioniert ist. Die Motorsteuerung 7 umfasst in Sandwich-Bauweise drei übereinander angeordnete Leiterplatten 22, auf der diverse Komponenten 28 auf der Oberseite 32 und/oder der Unterseite 33 der Leiterplatte 22 angeordnet sind. Auf der unten dargestellten Leiterplatte 22 können beispielsweise Hall-Sensoren zur Überwachung des Betriebszustandes des ersten Motors 5 und Entstörfilter im Hinblick auf elektromagnetische Felder vorgesehen sein. Auf der darüber angeordneten Leiterplatte 22 sind insbesondere Mikrocontroller, Spannungsregler, ein CAN Interface und ähnliche Bauteile vorgesehen. Die oben dargestellte Leiterplatte 22 umfasst vorteilhafterweise eine so genannte H-Brücke (4 Transistoren, die H-förmig angeordnet sind) sowie ein Verpolschutz und/oder weitere Filter im Hinblick auf elektromagnetische Störungen. Die Komponenten 28 sind auf den Leiterplatten 22 elektrisch leitend verbunden, beispielsweise über entsprechend gestaltete Stanzgitter, so dass ein sehr kompakter Aufbau der ersten Motorsteuerung 7 gegeben ist. Zudem erlaubt die direkte Anbindung bzw. Positionierung der ersten Motorsteuerung 7 am ersten Motor 5 einen Platz sparenden Einbau der ersten Einheit 9 im Bereich einer Fahrzeugklappe.

Zusätzlich ist die erste Motorsteuerung 7 mit einem becherförmigen Gehäuse 29 geschützt, dass einfach über die erste Motorsteuerung 7 gestülpt und mit dem ersten Motor 5 verbunden werden kann. Dieses Gehäuse 29 ist vorteilhafterweise aus Aluminium oder Weißblech und fungiert somit auch als EMV-Schutz.

Um eine zu große Wärmeansammlung im Inneren des Gehäuses 29 zu vermeiden, sind die Leiterplatten 22 über Leiterbahnen 31 auch mit einem Ring 30 verbunden, der im Kontakt mit dem Gehäuse 29 ist. Der Ring 30 umfasst insbesondere eine rundum laufende "Kupferleitbahn" zur Wärmeabfuhr, welche mittels einem metallischen Federring eine thermische Verbindung zum Gehäuse bereitstellt. Gleichzeitig kann das Gehäuse 29 so in der Lage stabilisiert werden. Damit wird eine Wärmeableitung hin zum äußeren Gehäuse 29 realisiert, so dass die Innen liegenden Komponenten 28 gegenüber Überhitzung geschützt sind. Zur Vermeidung des Eindringens von Feuchtigkeit, Staub oder anderen Fremdkörpern in den Innenraum des Gehäuses 29 sind im Kontaktbereich zum ersten Motor 5 Dichtungen 17 vorgesehen.

Die vorliegende Erfindung erlaubt in besonders einfacher Weise die Integration von zwei elektrischen Motoren, die symmetrisch zur Fahrzeuglängsachse zwischen Heckklappe und Karosserie angeordnet sind, wobei die Baugruppen Elektromotor, Kraftumlenkelemente, Elektronik und gegebenenfalls auch Kupplung auf eine kompakte Art umbaulich miteinander vereint und störsicher angeordnet sind.

### Bezugszeichenliste

- 1: Vorrichtung
- 2: Klappe
- 3: Kraftfahrzeugbauteil
- 4: Schwenkantrieb
- 5: erster Motor
- 6: zweiter Motor
- 7: erste Motorsteuerung
- 8: zweite Motorsteuerung
- 9: erste Einheit
- 10: zweite Einheit
- 11: Nassbereich
- 12: Kraftfahrzeug
- 13: erste Stirnseite
- 14: zweite Stirnseite
- 15: Regelungsaggregat
- 16: Managementsystem
- 17: Dichtung
- 18: Kabel
- 19: Spindel
- 20: Kupplung
- 21: Getriebe
- 22: Leiterplatte
- 23: Stecker
- 24: Stromzufuhr
- 25: erste Sensoranordnung
- 26: zweite Sensoranordnung
- 27: Datenverbindung
- 28: Komponente
- 29: Gehäuse
- 30: Ring
- 31: Leiterbahn
- 32: Oberseite
- 33: Unterseite
- 34: Achse

## Patentansprüche

1. Vorrichtung (1) zum Betätigen einer schwenkbaren Klappe (2) an einem Kraftfahrzeugbauteil (3) aufweisend einen Schwenkantrieb (4) mit zwei elektrischen Motoren (5, 6) und zwei elektrischen Motorsteuerungen (7, 8), **dadurch gekennzeichnet, dass** die Motoren (5, 6) eine bauliche Einheit (9, 10) mit jeweils einer elektrischen Motorsteuerung (7, 8) bilden.

2. Vorrichtung (1) nach Patentanspruch 1, **dadurch gekennzeichnet, dass** die Einheiten (9, 10) im Nassbereich (11) eines Kraftfahrzeuges (12) angeordnet sind.

3. Vorrichtung (1) nach Patentanspruch 1 oder 2, **dadurch gekennzeichnet, dass** die Motoren (5, 6) stabförmig ausgeführt sind, wobei an deren Stirnseite (13, 14) die elektrische Motorsteuerung (7, 8) positioniert ist.

4. Vorrichtung (1) nach einem der vorhergehenden Patentansprüchen, **dadurch gekennzeichnet, dass** die Komponenten der Motorsteuerung (7, 8) in Sandwich-Bauweise angeordnet sind.

5. Vorrichtung (1) nach einem der vorhergehenden Patentansprüchen, **dadurch gekennzeichnet, dass** eine Einheit (9) ein Regelungsaggregat (15) aufweist, das eine abgestimmte Verfahrweise der beiden Motoren (5, 6) regelt.

6. Vorrichtung (1) nach einem der vorhergehenden Patentansprüchen, **dadurch gekennzeichnet, dass** im Bereich der Komponenten der Motorsteuerung (7, 8) wenigstens eine der folgenden Schutzmaßnahmen vorgesehen ist: Mittel zum Schutz der Umgebung gegen elektromagnetische Abstrahlung des Motors sowie der Motorsteuerung, Mittel zum Schutz der Motorsteuerung gegen Temperaturschwankungen, Mittel zum Schutz der Motorsteuerung gegen Kontakt mit Fremdkörpern.

7. Vorrichtung (1) nach einem der vorhergehenden Patentansprüchen, **dadurch gekennzeichnet, dass** zumindest eine der beiden Motorsteuerungen (7, 8) mit einem Managementsystem (16) für das Kraftfahrzeug (12) zusammenwirkt.
